# EUROPEAN PATENT SPECIFICATION

(11) **EP 1 862 425 B1**
(45) Date of publication and mention of the grant of the patent: **06.06.2012**
(21) Application number: 06729869.5
(22) Date of filing: 24.03.2006
(51) Int. Cl.: B60W 40/10, B60C 23/00, B60R 16/02, B60W 30/02, B60C 23/06, B60T 8/172, B60C 23/04

(54) **METHOD FOR ESTIMATING TIRE SLIP ANGLE AND TIRE WITH SENSOR**
VERFAHREN ZUM SCHÄTZEN DES REIFENSCHLUPFWINKELS UND REIFEN MIT SENSOR
MÉTHODE POUR L'ÉVALUATION D'UN PNEU ET DE SON ANGLE DE GLISSEMENT À L'AIDE D'UN DÉTECTEUR

(30) Priority: 24.03.2005 JP 2005087174
(43) Date of publication of application: 05.12.2007
(73) Proprietor: Kabushiki Kaisha Bridgestone, Chuo-ku, Tokyo 104-8340 (JP)
(72) Inventor: NAGAYA, Go, Tokyo 1878531 (JP)
(74) Representative: Oxley, Robin John George
(86) International application number: PCT/JP2006/305921
(87) International publication number: WO 2006/101191

(56) References cited:
- WO-A1-03/082644
- JP-A- 2003 127 888
- JP-A- 2003 520 735
- JP-A- 2004 359 203
- US-A1- 2002 166 373
- US-B1- 6 539 295

## Description

### Background of the Invention

### [Field of the Invention]

The present invention is related to a method for estimating a tire slip angle of a vehicle under running condition and a tire with sensors for estimating the slip angle mounted therein.

### [Description of the Related Art]

In order to improve the running stability of a vehicle, it has been sought to feed back a condition of tire such as tire slip angle to a vehicle control apparatus upon accurately estimating those conditions. By making use of that information, highly developed control by means of vehicle control apparatus can be available and thus further improvement in safety can be expected. As a method for estimating the above tire slip angle, several methods have been proposed such as estimation thereof from steering angle, vehicle speed, yaw rate and lateral acceleration, from utilizing Doppler effect of ultrasonic wave, from non-contact optical speed meter or from position information through GPS (for example, refer to Patent Document 1 and 2). (Japanese Laid-open Patent Document 1. No. 2003-16543). (Japanese Laid-open Patent Document 2 No. H08-183433) Attention is also drawn to the disclosure of US6, 539, 295.

However, the above method of estimating the slip angle from the steering angle, vehicle speed, yaw rate and lateral speed is heavily affected by external disturbances such as sensor errors and change of µ of a road surface, and such a situation gives rise to a problem of demanding a complicated corrections in order to improve the estimation accuracy of the slip angle.

And further, the method of obtaining the slip angle by means of calculation based on a direct observation of the road surface from the vehicle body by means of a non-contact sensor such as ultrasonic sensor has been confronted with a problem such that the detection performance is adversely affected by road surface conditions. Especially, the road conditions of wet road, iced road, or road covered with snow give rise to a problem where such road conditions necessitates an accurate slip angle estimation but self contradictory such conditions hinder the accurate estimation so as to degrade it.

The present invention is made in order to overcome the problem hitherto confronted with, and object of the present invention is to enable to a driver to drive a vehicle safely by providing a tire within which sensors for estimating slip angle are mounted.

### Summary of the Invention

The inventors engaged in the present invention reached the present invention as a result of earnestly proceeded studies of those inventors based on their finding such that the slip angle produced during running can be estimated accurately by comparing magnitude of the deformation speed cause in the tire tread portion on the vehicle body side and the one on the outer side appearing at the time when the tire contact with the road. Then, according to a first aspect of the present invention there is provided a method of detecting a slip angle of a tire as claimed in claim 1.

### Effect of the Invention

According to the present invention, strain sensors or vibration sensors arranged in a single pair or in plural pairs are placed at equally spaced positions symmetrically with respect to the center line in a direction of tire axis, the deformation condition and the vibration condition of the tire are measured and the indications of deformation speed of the tire occurring at the starting point of the contact patch are measured at the above respective positions and the tire slip angle is estimated from the ratio of the deformation speeds of the tire detected on the vehicle body side to the one on the outer side, which is computed from the above indications of the deformation speeds or estimated from the tire bending speed, thereby enabling the slip angle estimation accurately without being affected by condition of road surface.

On this occasion, it is possible to correct the estimation value of the slip angle based on the indications of the respective length of contact portion with a road surface obtained from the difference between the occurrence time of the peek value detected by the sensors exhibited at entering of the tire tread into the contact portion with the road and the same exhibited at getting out therefrom, and also it is possible to correct the estimation value of the slip angle based on the estimated load or degree of change of the load having been obtained from average values of the above indications of length of contact portion, thereby enabling to enhance further the improvement of accuracy of the slip angle estimation.

And further, provision of sensors is made in plural paired in stead of the foregoing single paired ones, upon detecting indication of the deformation amount in addition to that of deformation speed at respective paired positions equally spaced apart in the axial direction of the tire and symmetrically with respect to the center of the tire axis so as to correct the value of the slip angle estimated from the indication of the deformation speed based on the indication of the deformation amount, the accuracy of estimating the slip angle can be further improved even when a camber angle is provided.

In this case, for obtaining peak values from at least a single paired sensors located outside of the remaining sensors with respect to the center in an axial direction of the tire, the detection is made at the point where the contact pressure is maximized occurring at the time of entering of the tire tread into the contact portion with the road associated with the rotation of tire, and by obtaining the indication of the deformation amount based on thus obtained peak values the indication of the deformation amount can be estimated accurately even when the camber angle is small.

### Brief Description of the Drawings

Fig.1 is a block diagram showing a constitution of a slip angle estimation apparatus as given in the Embodiment 1.
Fig.2 is a schematic diagram showing a tire with sensors mounted therein as given in the Embodiment 1.
Fig.3 shows relation slip between deformation of tread ring and the deformation speed waveform.
Fig.4 (a) and Fig.4 (b) shows relation slip between deformations of tread ring and deformation speed waveform at the time of entering into the leading edge.
Fig.5 is a schematic diagram showing configuration of contact patch.
Fig.6 shows deformation speed waveform with a slip angle added.
Fig.7 shows change of deformation speed at the time of entering into leading edge associated with change of slip angle.
Fig.8 shows the relation of the slip angle VS deformation speed ratio at the time of entering into the leading edge.
Fig.9 shows the change of the average contact length indication associated with change of the slip angle.
Fig.10 shows slip angle after the load corrected VS the deformation speed ratio at the time of entering into the leading edge.
Fig.11 shows a block diagram showing constitution of the slip angle estimation apparatus as presented in the best made Embodiment 2.
Fig. 12 (a) and Fig. 12 (b) show a schematic diagram of the tire with the sensor mounted therein as presented in the preferred Embodiment 2.
Fig.13 (a) and Fig. 13 (b) show the relation of deformation of the tread ring VS deformation speed waveform.
Fig. 14 (a) and Fig. 14 (b) show the relation of deformation of the tread ring VS deformation waveform with the camber angle provided.
Fig. 15 (a) and Fig.15 (b) and Fig 15(c) shows the change of deformation speed waveform VS measured slip angle with respect to time under a slalom running.
Fig.16 (a) and Fig. 15(b) and Fig.15(c) shows change of bending speed at respective portions, total bending speed and measured slip angle with respect to time under a slalom running.
Fig.17 (a) and Fig. 17(b) shows the relation of camber correction value VS measured camber angle against the ground with respect to time.
Fig.18 (a) and Fig. 18(b) shows change of wheel speed VS load indication with respect to time under a slalom running.
Fig.19 shows change of camber angle, load, slip angle estimation value after correction with respect to time.

### Description of the Preferred Embodiments

Preferred embodiments of the present invention will be described hereinbelow with the reference to the accompanying drawings.

### Preferred Embodiment 1

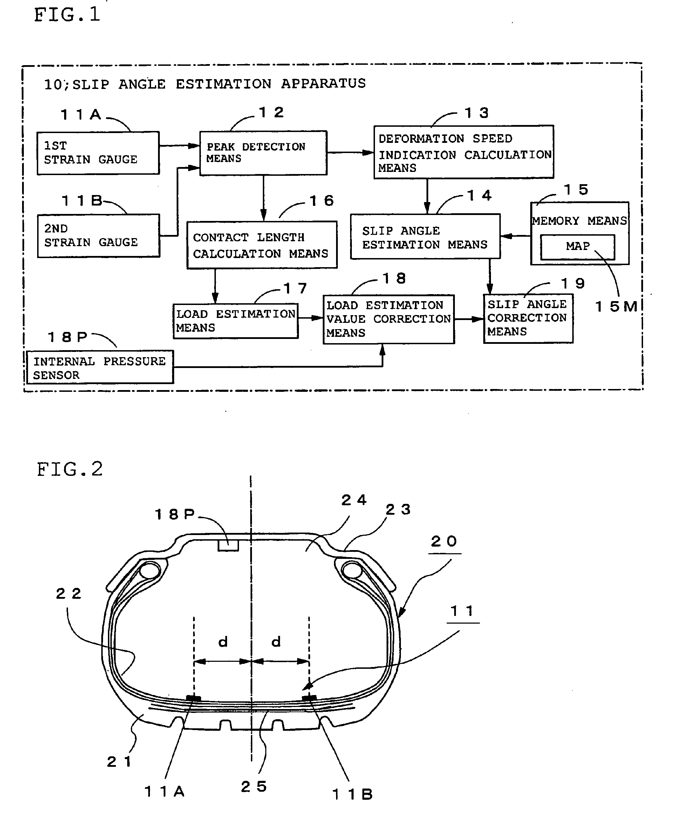

Fig.1 is a block diagram showing constitution of the slip angle estimation apparatus 10, and Fig.2 is a schematic diagram of the tire 20 with sensors mounted therein. In each of those drawings, reference numerals 11A and 11B denote the 1st and the 2nd strain gauges, respectively, for measuring deformation amount of the inner liner portion 22 deformed by the input from road surface to the tire tread 21 and those strain gauges 11A and 11B are mounted on the liner portion 22 of the tire 20 on the vehicle body side and the outer side, respectively at the positions located equally spaced apart in a tire axial direction and symmetrically with respect to the center thereof. The first and second strain gauges 11A and 11B constitute the paired sensors 11 according to the present invention.

The reference numeral 12 denotes a peak detection means for obtaining the deformation speed waveform by differentiating the deformation waveform detected by the paired sensors 11 with respect to time and based on thus obtained deformation speed wave the peak values of the deformation speed waveform Vf and Vk and their occurrence times tf and tk are detected, wherein Vf and Vk denote the peak values of the deformation speed wave exhibited at the time of entering into the leading edge of the tire tread and of leaving the trailing edge, respectively and tf and tk denote the time of entering into the leading edge and that of leaving the trailing edge, respectively. The numeral 13 denotes the deformation speed indication computing means for computing the indication of the deformation speed of the tire tread 21 at the positions where the 1st and 2nd strain gauges are mounted based on the magnitude of Vf of the deformation wave speed at the time of entering into the leading edge. Numeral 14 denotes the slip angle estimation means for obtaining ratio of the deformation speed indication from respective paired sensors 11 computed by the deformation speed indication computing means 13 and for estimating the slip angle under running condition of a vehicle based on the ratio of the deformation speed indications obtained as above with reference to the map 15M containing the relation of the ratio of deformation speed indications obtained as above VS. the tire slip angle stored in the storage means 15. Numeral 16 denotes the length of contacting with ground (hereinafter, "The length of contacting with ground" will be abbreviated to read "contact length") computing means for computing the contact length indication from the time difference between occurrence time of the above two peak values. Numeral 17 denotes the load estimation means for estimating the load or degree of change of the load exerted to the tire 20 from the average value of the contact length indications having been obtained through averaging the contact length indications computed based on the outputs of the strain gauges 11A and 11B. Numeral 18 denotes the load estimation value correction means for correcting the load or degree of change of the load based on the internal pressure value detected by the internal pressure sensor 18P mounted on the wheel 23 on the side of the air room 24. Numeral 19 denotes the slip angle correction means for correcting the estimation value of the tire slip angle having been estimated through the slip angle estimation means 14 based on the above corrected load or the estimated value of the change of the load.

In the present example, as shown by Fig.2, the paired sensors 11 comprising the strain gauges 11A and 11B are arranged so that direction of detection of each of those gauges 11A and 11B is oriented to detect the deformation in a circumferential direction of the tire 20, deformation speed of the tire tread 21 is detected through each of those gauges and in turn ratio of those deformation speeds is obtained and then the estimation of the slip angle produced in the tire is obtained from thus obtained deformation speed ratio.

Hereinafter, description on the relation between the tire slip angle and ratio of the deformation speeds will be given.

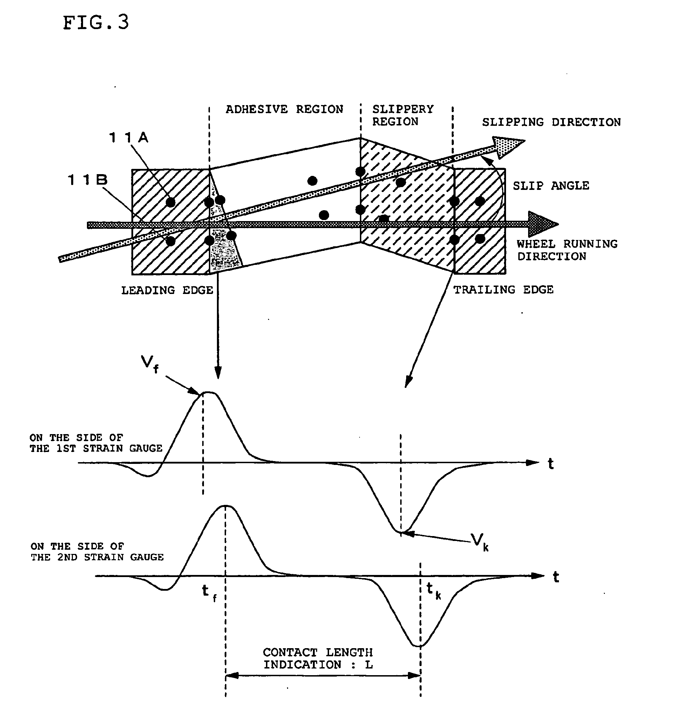

The contact patch of the tire has, as shown by Fig. 3, the leading edge and the trailing edge as being looked at in a circumferential direction of the tire and the distance therebetween is called as the contact length.

In this condition, as shown by Fig. 3, associated with the rotation of tire, the tread ring comprising the tire tread and the belt undergoes a sudden deformation as if the ring face is bent and curved at the moment of contacting with the road surface and as a result, a peak appears in the deformation speed waveform running in a circumferential direction of the inner face of the tire. The time at which a peak appears in the deformation speed waveform in the circumferential direction is judged as the moment at which an arbitrary position of the tire enters into the leading edge of the contact patch.

When the tire leaves the contact patch, the tread ring is deformed suddenly in a direction opposite to the one exhibited at the time of entering in, and hence the peak appears in a direction opposite to the one exhibited at the time of entering therein. Thus, the time at which the reversed peak appears is judged as the moment at which an arbitrary position of the tire leaves the trailing edge of the contact patch.

When a slip angle is added to the tire, the tread ring undergoes a deformation at the contact patch in an axial direction of the tire (perpendicular to the wheel axial direction in the drawing). Considering the hysteresis of the deformation of the tread ring exhibited at the time of turning, before entering into the leading edge, the ring is directed to the rotational direction of the tire, but immediately after entering into the leading edge and fromthat time the tread ring is deformed to the formation specified as the adhesive region in the drawing and the ring is directed to the direction along which the road runs away being looked at stepping in from the wheel. Then, as the deformation of the ring in the axial direction of the wheel is enlarged, the shearing stress caused between the tire tread and the road surface approaches the maximum friction exhibited at the contact portion and hence tire begins to slip and the ring is deformed so as to return back to be directed to the direction of the wheel as shown by the slippery region of the drawing. Then, subsequent to leading the road surface after leaving the trailing edge, the tread ring returns back to the direction of the wheel as was originally oriented.

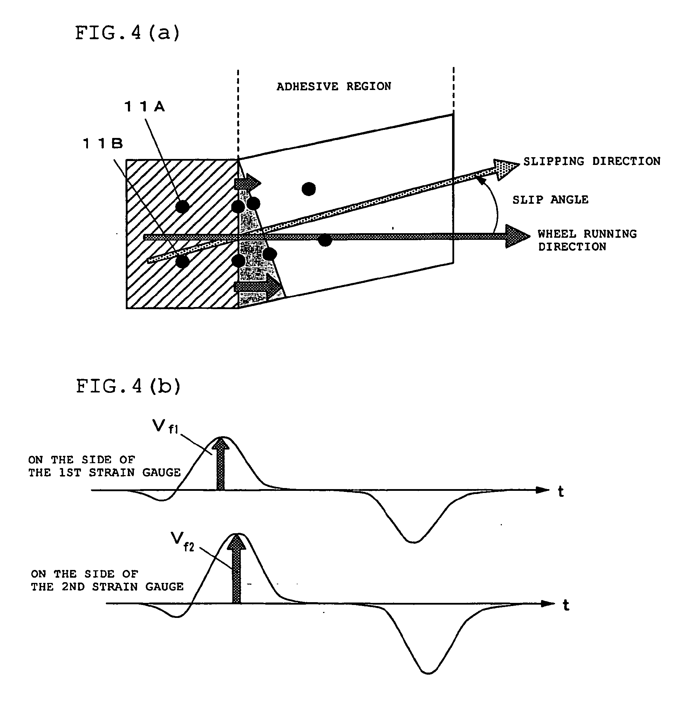

In this occasion, as shown by Fig.4 (a), immediately before entering into the leading edge, the tread ring is directed to the rotational direction of the tire and immediately after entering into the same, the ring is directed to the direction of running away of the road, and hence at the moment of entering into the leading edge the ring is bent and curved in the tread surface by the amount of the slip angle being looked at from the radial direction of the wheel. As a result, as shown by Fig. 4 (b) the peak value (deformation speed Vf1 at the time of entering into the leading edge) of the waveform obtained by differentiating with respect to time the waveform (hereinafter, "waveform A obtained by differentiating with respect time the waveform B is abbreviated to read" waveform A through time differentiation of waveform B") from the strain gauge (the 1st strain gauge 11A) inside the bending detected through the peak detection means 12 diminishes and the peak value (deformation speed Vf2 at the time of entering into the leading edge) of the waveform through differentiation of the waveform from the strain gauge (the 2nd strain gauge 11B) outside bending. Then, it has become to be acknowledged that by obtaining the ratio of the deformation speed Vf1 on the inside the bending to the deformation speed Vf2 outside the bending, namely R= (Vf1/Vf2), the ratio R shows a good correlation with slip angle added to the tire.

Then, the deformation speed indication calculation means 13 receives deformation speeds Vf1 and Vf2 at the tire of entering into the leading edge and those deformation speeds Vf1 and Vf2 are assigned as the indications of the deformation speed of the tire tread at the positions at which the 1st and the 2nd strain gauges, namely 11A and 11B are mounted.

Then, if the map 15M is prepared containing the relation between the slip angle and the deformation speed ratio, R= (Vf1/Vf2) having been obtained beforehand and thus prepared map 15 were to be stored in the storage means 15, then the slip angle under running condition can be estimated accurately from the relation of the deformation speed ratio R=(Vf1/Vf2) and the relation of the ratio R VS the tire slip angle stored in the map 15M, wherein the deformation speeds Vf1 and Vf2 have been detected from the waveform through the strain gauges 11Aand 11B constituting the 1st paired sensors 11.

On the other hand, when the slip angle is added to the tire as above, deformation speed ratio changes depending on the slip angle and also effected by change of the load and is characterized in that as the load becomes large the ratio R also becomes large and as the load becomes small, the ratio also becomes small. Then, by correcting the slip angle ratio R with respect to the effects caused by the load, the estimation accuracy of the slip angle can be improved further.

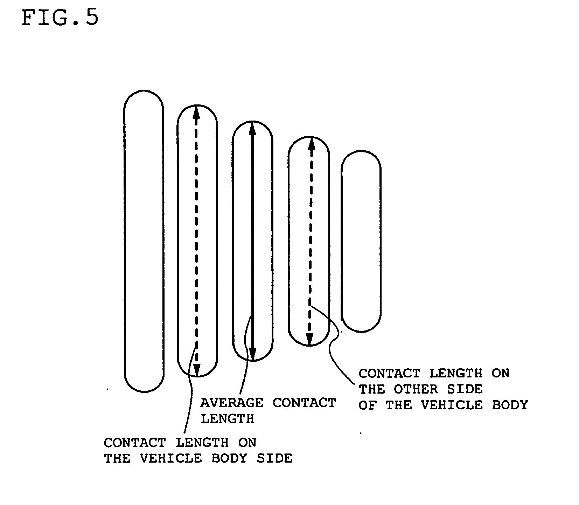

When the load changes, the shape of the contact patch changes in such a manner that the product of the pressure exerted to the contact face and ratio of the area of the portion actually contacting with the road surface to that of non contacting portion with the road surface changes approximately proportionally to the load. Generally speaking, as shown by Fig.5 when the load applied changes, since the tire is characterized in that width of the contact portion of the tire does not change so much but length of the contact portion changes depending on the load, the load or degree of change of load can be estimated from the indication of the contact length indicative of the physical amount corresponding to the above contact length.

In this example, the correction with respect to load is also adapted to be carried out based on the paired sensors 11. Concretely speaking, based on the fact that the time difference Δt between the time of entering into the leading edge tf and that of leading the trailing edge tk is indicative of the physical amount corresponding to the contact length, the time difference Δt1 and Δt2 from respective paired sensors 11 are computed by the contact length computing means 16 and average value of the indication of the contact length is computed by dividing the average value of the above time differences Δt1 and Δt2 by rotation period of the wheel through the load value estimation means 17; from this average value of contact length indication, the load or degree of change of load exerted to the tire 20 can be estimated and in turn the estimation value of the tire slip angle estimation by the slip angle estimation means 14 is corrected.

And further, since the flexural amount of tire changes dependently on the internal pressure of the tire too, in this example the internal pressure sensor 18P is mounted on the wheel 23 on the side of the tire air room 24, and also load estimation value correction means 18 is provided so as to correct the above load or degree of change of load based on the values of the internal pressure detected by the internal pressure sensor 18P as well as on the fundamental characteristics table (dependency of flexural amount on the internal pressure and the load) having been measured beforehand.

And the slip angle correction means 19 corrects the slip angle estimation value estimated through the slip angle estimation means 14 based on the estimation value of the load or degree of change of the load which has been estimated through the load estimation means 17 and which has been corrected through the load estimation value correction means 18.

By virtue of this correction, the correlation coefficient of the slip angle added to the tire VS the deformation speed ratio R can be further raised, thereby improving further the estimation accuracy of the slip angle.

In this manner, according to the preferred Embodiment 1, deformation amount of the tire tread 21 is measured by the paired sensors 11 comprising the 1st and the 2nd sensors 11A and 11B located at equally spaced apart in a tire axial direction and symmetrically with respect to the center of the tire directional line, the deformation speed Vf1 and Vf2 indicative of peak values of deformation speed occurring at the time when the tire tread enters into the contact portion is obtained by differentiating with respect to time the waveform obtained through the paired sensors 11, thus obtained deformation speed Vf1 and Vf2are designated as indication of deformation speed; and estimation of the slip angle under running condition of a vehicle is made based on the ratio of the deformation speed indications, R= (Vf1/Vf2) obtained through the paired sensors 11 and the map 15M stored in the storage 15 containing the relation of the ratio of the deformation speed indications obtained beforehand VS the tire slip angle, thereby enabling estimation of the tire slip angle accurately.

And further, in the preferred Embodiment 1, since estimation of the tire slip angle is made from condition of deformation of the tread ring comprising the tire tread 21 and the belt 25, not only the estimation is free from influence from road condition but also the slip angle, changeable depending on the road condition can be estimated accurately.

In the preferred Embodiment 1, though the sensor 11 are placed on the inner liner portion 22, it can be placed in the tire block; in the latter case the estimation accuracy of the deformation condition of the tread ring can be improved by virtue of the paired sensors 11 being placed near the contact of the tire and yet in view of durability, it is preferable to place the paired sensors on the inner liner portion 22.

Also, in the foregoing description, strain gauges 11A and 11B are exemplified as sensors constituting the paired sensors 11. However, type of sensor cannot be confined to the above but those of other types such as vibration sensor for detecting vibration, piezoelectric film generating potential caused by bending or stretching, or piezoelectric cable can be used. If the paired sensors comprising the above sensors such as the vibration sensor, piezoelectric film, piezoelectric cable mounted on the inner liner portion 22 are available for readily outputting an output having a value corresponding to the deformation speed, based on this output the peak value and its occurrence time directly corresponding to the deformation speed can be obtained, and also if the value depending on the deformation can be readily outputted, similar to the manner as given in the Embodiment 1, by obtaining the deformation speed waveform by differentiating the foregoing output with respect to time and obtaining the peak value and its occurrence time exhibited at the time of entering into the loading edge, indication of deformation speed and that of the contact length can be obtained.

In the above example, a single paired sensors were employed for the sensor 11. However, instead of a single paired by employing plural paired sensors, accuracy of the estimation can be improved further. Especially, by placing the paired sensors at least in two positions with predetermined intervals in a rotational direction of the tire, estimation accuracy of the slip angle can be improved further. In this arrangement of those sensors too, it is preferable to mount the sensors spaced apart equally in the axial direction of the tire and symmetrically with respect to the center of the tire tread in the axial direction of the tire.

As to the electric power supply for driving the paired sensors 11 and signal processing circuits such as the peak detection means 12, for the sake of simplification of the device for exchanging information between inside and outside of the tire, use of passive type, e.g., battery less type is preferable. However, it is acceptable to mount the date transmission circuit including a battery in the tire air room 24 or on the wheel 23. Or, instead of a battery a small, generator can be used for driving the sensors and the circuitries.

### EXAMPLE 1

The tire with size of 225/55R17 having the configuration as shown by Fig.2 is put on an indoor test equipment for running on a belt shaped flat road, and the deformation speed of the tire tread was detected from the output of a single paired strain gauges mounted to the tire which the slip angle was changed in constant levels up to ±8° under a constant load. In the above measurement, the internal pressure of the tire was kept at 230Pa and running speed was kept constant at 60km/h and loading was changed in seven levels between 200N∼1000N.

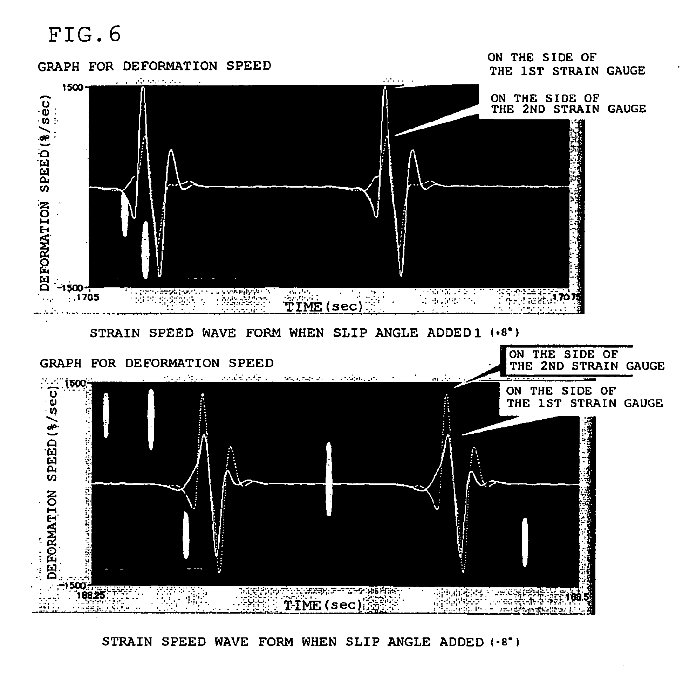

The graph as shown by Fig. 6 is a deformation speed waveform with the slip angle of +8°added measured at the inner liner portion. The peak in the positive direction of the waveform corresponds to the deformation speed Vf at the time of entering into the leading edge and, in this connection, the output from the strain gauge 1 on the side of the slip angle input becomes large and the one on the opposite side becomes small. In contrast with the foregoing, when the slip angle in a reversed direction (-8°) is added, the output from the strain gauge 2 on the side of the slip angle input becomes large and the same on the opposite side becomes small, and as a whole, the peak value of the deformation speed changes symmetrically with respect to the direction of the slip angle. And in the case where the slip angle is added in a reversed direction too, the waveform corresponding to a peak in a positive direction indicates the deformation speed Vf occurring at the time of entering into the leading edge.

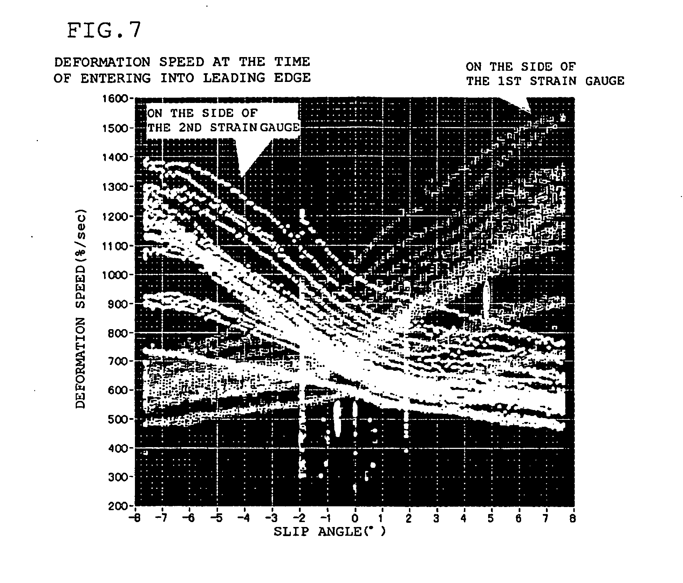

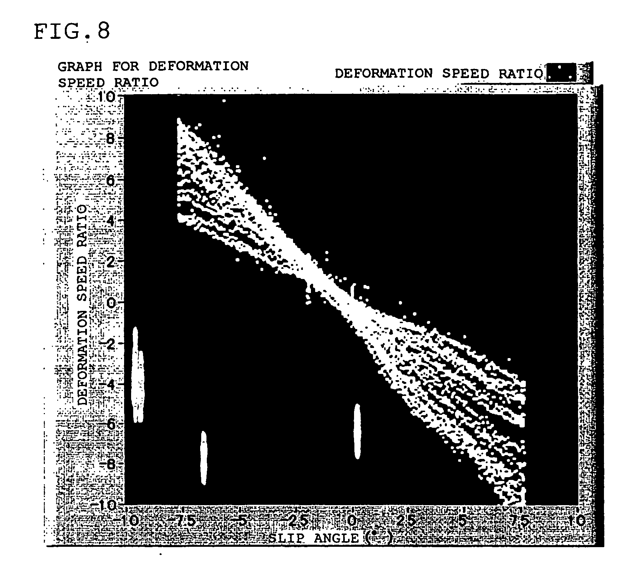

Next, the output from the strain gauge was measured with the slip angle changed continuously under the condition of a constant load applied. As a result as shown by Fig. 7, by putting the added slip angle on the axis of abscissa and putting the deformation speeds from the respective strain gauges 1 and 2 on the axis of ordinate, it is understood that regardless of magnitude of the load, as the slip angle becomes large the deformation speed of one of two becomes large and the other one becomes small. Then putting the ratio of deformation speeds obtained by dividing larger one by smaller one on the axis of ordinate and putting the slip angle on the axis of abscissa, from the plotted data on the coordinate it is understood from Fig. 8 that the deformation speed ratio change linearly with respect to the change of the slip angle covering the entire span extended to large values of ±8° and the inclination of the slope linearly changes depending on the load. It is noted that in Fig.8 the subtracted value by one from the deformation ratio is shown and the diagram is adjusted so that those lines pass the original point when the slip angle is grew.

In this manner, though the inclination of slope between the tire slip angle and the deformation speed ratio R=(Vf1/Vf2) changes depending on the load, the slip angle and the ratio R have a relation of changing approximately linearly, it has been acknowledged that the slip angle under running condition of a vehicle can be estimated accurately from the deformation speed ratio.

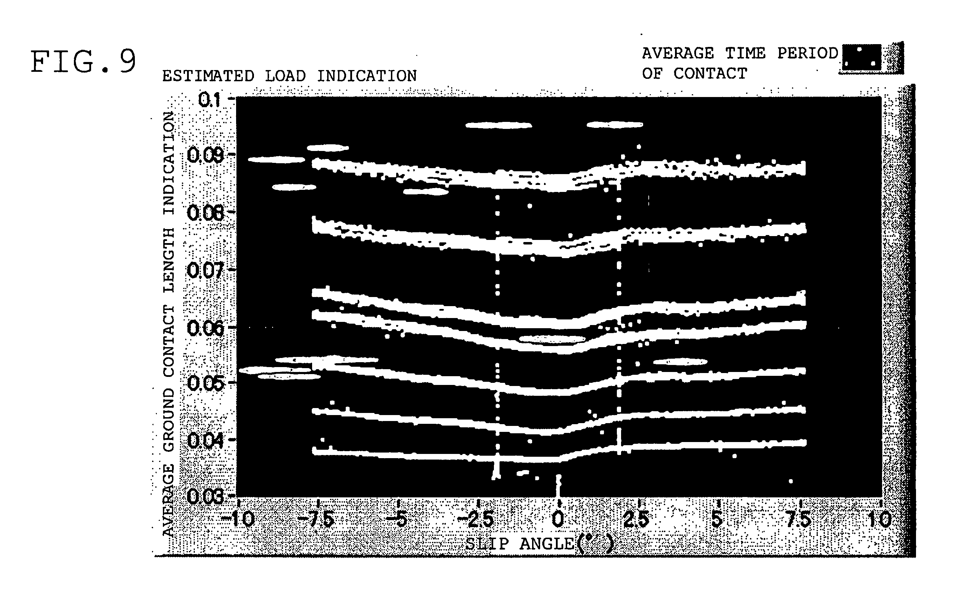

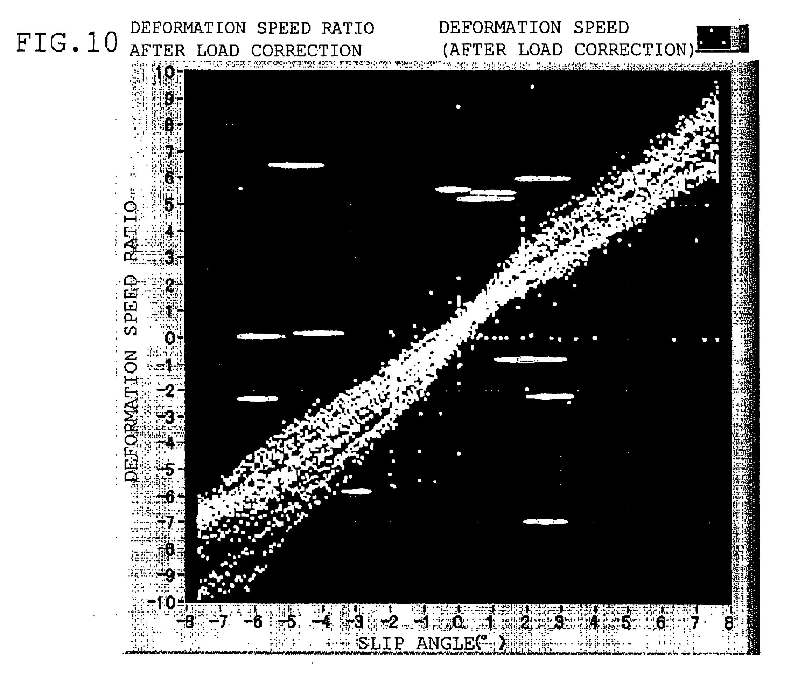

From the respective data of the deformation speed, the respective time differences Δt1 and Δt2 between the time of entering into the leading edge tf and that of leading the trailing edge tk are obtained and the value obtained by dividing the average value Δt of thus obtainedΔt1 and Δt2 by the period of rotation of the wheel is assigned as the average contact length and this average contact length is presented on the axis of ordinate and the slip angle is presented on the axis of abscissa as shown by Fig.9. As clearly shown by Fig.9, since the average contact length not only changes depending on the magnitude and direction of the slip angle but also exhibits a stable change depending on the load, upon estimating the contact load against the road surface from the above average contact length, the inclination of the deformation speed with respect to the slip angle as shown by Fig.8 can be corrected by the above estimated contact load. Fig.10 is a graph showing the relation of the deformation speed ratio corrected by the load estimated from the average contact length VS the slip angle, and it is understood that difference of inclination due to the load has been corrected. Accordingly, it has been acknowledged that the data detected from the tire can be solely available for estimating the slip angle in good order to the extent of a large value of the slip angle even when the load changes.

### Embodiment 2

In the preferred Embodiment 1, based on the deformation speed waveform obtained from the deformation waveform measured by the paired sensors 11 the peak values of the deformation speeds Vf1and Vf2 from respective sensors 11 occurring at the time of entering into the leading edge when the tire tread entering into the contact portion with the road surface are detected and upon assigning those peak values as respective deformation speed indications, the slip angle is estimated from the ratio of the foregoing deformation speed indications, i.e., R=(Vf1/Vf2). However, plural paired sensors can be employed so as to obtain respective deformation speed indications from the peak values of deformation speed detected through at least two paired sensors. Then, upon obtaining the bending speed of the tire as a whole (total bending speed of the tire) based on the indication of the deformation speed from each pair of sensors, estimation of the tire slip angle can be made based on the total bending speed of the tire.

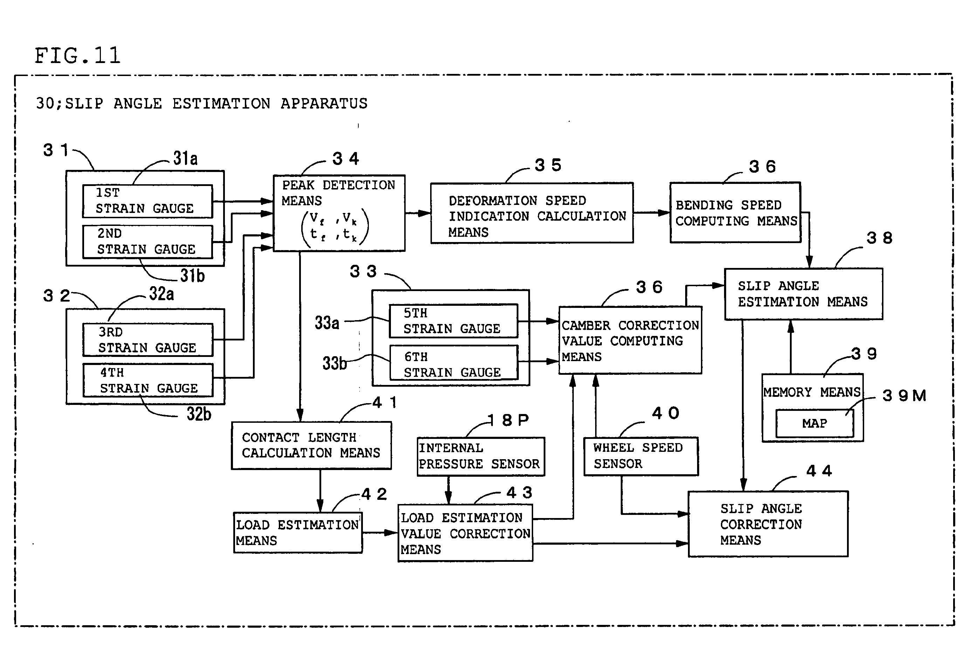

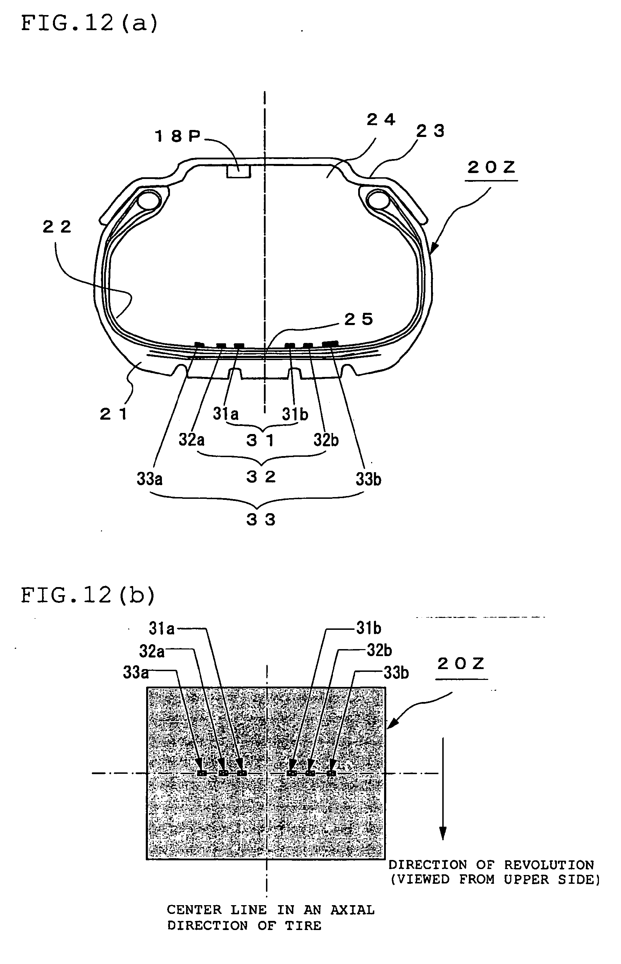

Fig. 11 is a block diagram of the slip angle estimation apparatus 30 given as the preferred Embodiment 2, and Fig. 12 (a) and (b) are the schematic diagrams of the tire with sensors mounted therein.

In each of those drawings, the numerals 31a and 31b denote the 1st and 2nd strain gauges constituting the 1st paired strain gauges 31 arranged in an axial direction of the tire equally spaced apart symmetrically with respect to the center of the tire axial direction. Then, the numeral 32 denotes the 2nd paired sensors comprising the 3rd and 4th strain gauges 32a and 32b positioned outside of the gauges 31a and 31b, respectively. Likewise the paired sensors 33 comprising the 5th and 6th strain gauges 33a and 33b positioned outside of the strain gauges 32a and 32b, respectively. Those strain gauges 31a ∼ 33a and 31b 33b are, as shown by Fig. 12 (b), arranged in a single location with respect to the rotational direction of the tire and approximately linearly in the axial direction of the tire. Numeral 34 denotes the peak detection means for obtaining the deformation speed waveforms by differentiating with the respect to time the deformation waveform measured by the paired sensors 31 and 32, respectively so as detect, from thus obtained deformation speed waveform, the peak value of the deformation speed Vf and Vk occurring at the time when the tire tread entering into the leading edge of the contact portion and leaving the trail edge and the time tf and tk at which the peak value Vf and Vk, respectively occurred.

35 denotes the deformation speed indication computing mean for computing respective deformation speed indication of the tire tread 21 exhibited at the positions, at which the 1st and 2nd strain gauges 31a and 31b and the 3rd and the 4th strain gauges 32a and 32b are mounted, based on the deformation speed Vf of the 1st and the 2nd paired sensors 31 and 32 exhibited at the time of entering into the leading edge, namely the deformation peak values V1a, V1b and V2a, V2b, respectively. Also in this example too, similar to the preferred Embodiment 1 those deformation peak values V1a, V1b V2a, and V2b themselves are designated as the deformation speed indications.

Numeral 3b denotes the bending speed computing means for computing the total bending speed of the whole tire based on the deformation speed indications from the 1st and the 2nd paired sensors 31 and 32, respectively computed by the deformation speed indication computing means 35. Concretely speaking, the bending speed exhibited at an upper side from the center of the axial direction of the tire is obtained from the difference between the deformation speed peak values V1b and V2b obtained through the 2nd gauge 31b and the 4th strain gauge 32b, respectively, namely Vb=V1b -V2b and likewise, the bending speed exhibited at a lower side from the center of the axial direction is obtained from the difference between the deformation speed peak values through the 1st strain gauge 31a and the 3rd strain gauge 32a, namely Va=V2a-V1a, and the total bending speed V, namely sum of the above difference can be obtained as V=Va+Vb.

Numeral 37 denotes the camber correction value computing means for computing the camber correction value C for removing the error in the total bending speed V due to the camber angle. Concretely speaking, after detecting the deformation speed peak values V3a and V3b measured by the 5th and the 6th strain gauges 33a and 33b, respectively which are located at the positions further away from the center in the axial direction of the tire than the 1st and the 2nd paired sensors are positioned therefrom, difference of those peak values, namely (V3a-V3b) is divided by sum of them, namely (V3a+V3b), thus obtained quotient is further divided by the load W exerted to the tire and finally this divided value is multiplied by the vehicle speed V to obtain the value C which is designated as the camber correction value.

The numeral 38 denotes the slip angle estimation means for estimating the slip angle of a vehicle under running condition, wherein the slip angle indication S is obtained from the total bending speed V computed by the bending speed computing means 36 and the camber correction value C computed by camber correction value computing means 37 so as to obtain S by S=V-C and finally the slip angle under running condition of the vehicle can be obtain from the above slip angle indication S with reference to the map 39M containing the relation having been obtained beforehand between the slip angle indication and the tire slip angle.

Numeral 40 denotes the wheel speed sensor mounted on the vehicle carrying the tire 20z with the sensors mounted therein according to the present invention. Numeral 41 denotes contact length computing means for computing the contact length indication from the time interval Δt=tk-tf between the occurrence time of the peak values V2a and V2b detected by the 2nd paired sensors 32 among the deformation wave speed Vf exhibited at the time of entering into the leading edge detected through the peak value detection means 34. Numeral 42 denotes the load estimation means for estimating the load or degree of change of load exerted to the tire 20z from average value of the contact length indication obtained by averaging the contact length indications through the contact length computing means 42. Numeral 43 denotes the load estimation value correction means for correcting the estimation value of the load based on the internal pressure value detected by the internal pressure sensor 18P mounted on the wheel 23 on the side of the tire air room 24. Numeral 44 denotes the slip angle correction means for correcting the slip angle of the tire obtained by the slip angle estimation means 38 based on the above corrected load estimation value and the information (in this case, vehicle speed V) detected by the wheel speed sensor 40.

In the present example, as shown by Fig. 12 (a) and (b), the direction of detection of the paired sensors 31∼33 are arranged to be oriented so as to detect the deformation caused in a circumferential direction of the tire 20z, thereby detecting the total bending speed V of the tire. Then the slip angle indication is computed upon correcting the total bending speed V by the camber correction value C computed from the deformation waveform, and the slip angle added to the tire can be estimated by correcting the slip angle indication with respect to the load W and the vehicle speed V.

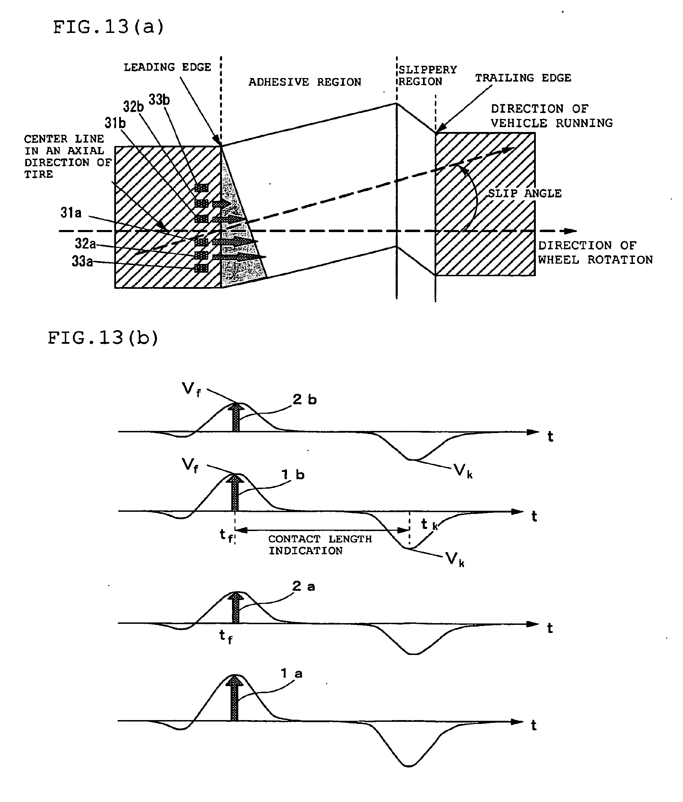

When a slip angle is added to the tire, as shown by Fig.13 (a) the tread ring is deformed to the direction of the axis of the tire (in this drawing, in the direction perpendicular to the direction of the wheel) at the contact patch. Considering the hysteresis of deformation of the tread ring at the time of turning, though the tread ring before entering into the leading edge is directed to the direction of the wheel rotation immediately after entering into the leading edge, the tread ring is deformed to the formation specified as the adhesive region and turns to the direction along which the road is running away being looked at from the wheel. And as the deformation of the ring in an axial direction of the wheel increases, the shearing stress between the tire tread and the road surface approaches the maximum friction at the contact patch and as a result the tire begins to slip and the tire tread ring is deformed so as to return to the direction of the wheel as specified by the slippery region of the drawing and after leaving the trailing edge, the tread ring returns to the direction of the wheel as was originally oriented.

In this instance, since immediately before entering into the leading edge the tread ring is directed to the rotational direction of the wheel and immediately after entering there into, the tread ring turns to the direction of running away of the road, at the moment of entering into the leading edge the ring is, being looked at from a direction of a radius of the wheel, bent and curved by the amount of the slip angle in the tread surface. Accordingly, as shown by Fig. 13 (b), the peak values (deformation speed peak values V1b and V2b) of the wave obtained by differentiating with respect to time the waveform through the peak value detection means 34 from the strain gauges positioned inner side of the bending (the 2nd and 4th strain gauges 31b, 32b) becomes small but peak values (deformation speed peak values V1a and V2a) of the waveform by differentiating with respect to time the waveform the strain gauges positioned outside of the bending (the 1st and 3rd strain gauges 31a, 32a) becomes large. Then, the difference between the peaks of the deformation. Then, the difference between the peaks of the deformation speed obtained through the 2nd and 4th strain gauges 31b and 32b, i.l., Vb=V1b-V2b means the bending speed exhibited at upper side with respect to the center of the tore axis. On the other hand, the difference between the peak values of the deformation speed obtained through the 1st and the 3rd strain gauges 31a and 32a, i.l., Va=V2a-V1a means the bending speed exhibited at lower side with respect to the center of the tire axis. Accordingly, by summing up those bending speeds the whole of the bending speed of the tire, i.l., total bending speed V=Va+Vb can be obtained. Since it is known that the total bending speed V and the slip angle has a good correspondence there between, by obtaining the total bending speed, the slip angle added to the tire can be estimated accurately.

In the case where the camber angle kept unchanged so that only the slip angle changes, as mentioned above the total bending speed V computed from the above peak values of the deformation speed and the slip angle added to the tire have a good correspondence. However, when a camber angle is applied, regardless of value of the slip angle a resultant effect is produced on the total bending speed depending on the camber angle.

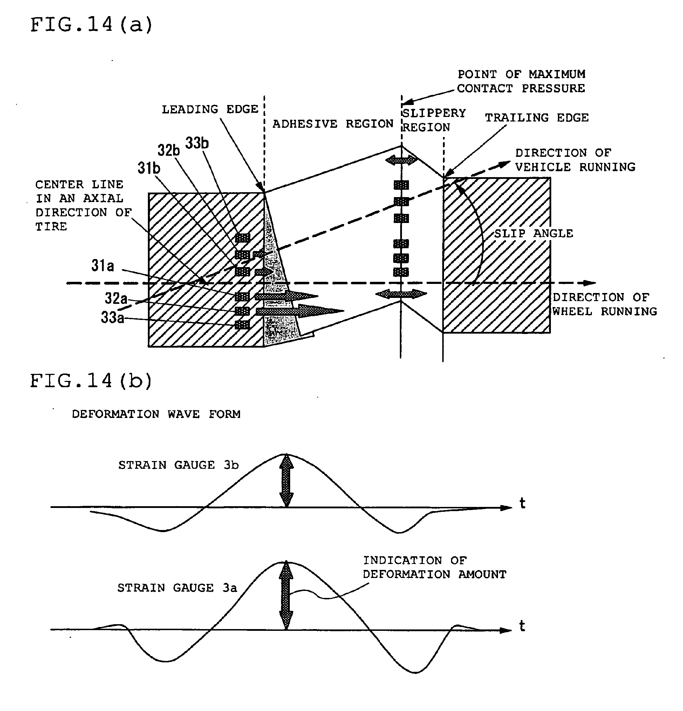

In other words, as shown by fig.14 (a), when camber angle is applied so as to tilt the tie downwardly, the slip angle also changes correspondingly. Concretely speaking, when the tire tilts downwardly under the condition where the running direction of a vehicle has a positive (clockwise) angle with respect to the direction of the tire rotation the slip angle becomes larger than the one exhibited in the case as shown by Fig. 13 (a). Amount of the change of the slip angle is determined by the camber angle and it is known that ever when the total bending speed changes due to change of the slip angle, amount of the change remains as a constant error. Therefore, removal of the error caused in the total bending speed V due to application of the camber angle is necessary.

In Fig.14 (a), the slip angle changes inn the plane determined by the direction of rotation of the tire and running direction of a vehicle. On the other hand, the camber angle changes in the plane determined by the direction of the tire axis and the direction perpendicular to the plane of the drawing. Therefore, change of the camber angle is exhibited most strongly immediately below the tire axis.

On the other hand, the deformation waveforms outputted from respective strain gauges 31a ∼ 33b reach their respective peaks where their contact pressures against road surface their respective peaks at the positions where their contact pressures applied, there is almost no difference between the deformation peak values V3a and V3b indicative of peak values of deformation waveform measured through respective gauges 31a ∼ 33b; however, when, as shown by fig.14(a), a camber angle tilting downwardly is applied, as shown by Fig. 14 (b) peak values through the strain gauges 33b inside the bending diminishes and through the strain gauges 33a outside the bending increases as typified by the deformation waveform from the 5th and the 6th strain gauges 33a and 33b. Also difference value of deformation peak value obtained through the strain gauges located at the positions farthest from the center of the tire axis, namely peak value V3a and V3b from the 5th and 6th strain gauges, respectively become largest. Then upon reviewing the relation between the alone peak value difference, i.1., (V3a-V3b) and the error due to the camber angle, it has been experimentally found that the value C which is assigned as the camber correction value is approximately the same with the error due to the camber angle contained in the total bending speed wherein dividing the difference of the peak deformation values (V3a-V3b) by sum of them, (V3a+V3b), and further divided by the load W and then this quotient is multiplied by the vehicle speed V and thus obtained value is designated as the camber correction value.

Then, upon obtaining the camber angle correction value C based on the deformation peak values V3a and V3b as indications of deformation amount, the value after subtracting the camber angle correction value C as an error component from the total bending speed V is assigned as the indication of the slip angle S such that S=V-C. Then, when the slip angle is added, the indication of the slip angle and the slip angle have a good correspondence there between. Accordingly, by obtaining the total deformation speed V using the 1st and the 2nd paired sensors 31 and 32, and by obtaining the camber angle correction value C using the 3rd paired sensors 33 so as to compute the slip angle indication S=V-C, the slip angle of a vehicle under running condition can be estimated from the above computed indication S of the slip angle with reference to the map 39M stored in the storing means 39 containing the relation between the slip angle indication and the slip angle obtained beforehand, thereby enabling the slip angle estimation accurately.

Since the slip angle indication S is influenced by change of the load and is characterized in that the influence is intensified as the load becomes large and the influence is weakened as the load becomes small, such an influence must be corrected depending on the load.

This estimation value of the load can be obtained, similar to the preferred Embodiment 1, utilizing the characteristics of the tire such that the contact length changes depending on the load; in other words if indication of the contact length indicative of a physical value corresponding to the contact length is known, the load or degree of change of the load can be estimated. In this example, the correction of the load can be performed similar to the Embodiment 1 through the contact length computing means 41 and the load estimation means 42 based on the deformation speed peak values V2a and V2b from the 3rd and the 4th strain gauges 32a and 32b constituting the paired sensors 32 and yet it is also possible to make computation from the difference between the occurrence time of deformation speed peak values V1a and V1b detected by the 1st paired sensors 31, namely Δt=tk-tf. In this regard, if the above correction of estimation value is made by internal pressure value detected by the internal pressure sensor18Pmounted on the wheel 23 of the tire 20Z of the tire 20Z on the side of the air room 24 of the tire, the improvement of accuracy of the load estimation can be enhanced further. Letting W denoted by the corrected value of the load as above and also designating the value obtained by dividing the above indication S by the load estimation value W, (S/W) as a correction value of the total bending speed V, thus obtained value (S/W) is the value depending on the slip angle only regardless of the load.

The slip angle indication S is affected by the tire rotational speed too and has a characteristics such that as the rotational speed increases S also increases and as the rotational speed decreases S also decreases. Then, letting V denoted by the vehicle speed detected by the wheel sensor 40 and assigning the quotient obtained by dividing S by the vehicle speed V, namely (S/V) as the correction value of the slip angle indication S, the value of (S/V) depends on the slip angle only without being affected by the vehicle speed. Accordingly, the slip angle estimation value Sz, which is corrected value of the slip angle indication S, can be expressed by the form of Sz=(V-C) / (W·V), where V denotes the total bending speed, C denotes the camber correction value, W denotes the load and V denotes the vehicle speed. By this expression, the effects due to the load and the vehicle speed V can be removed, and hence the estimation accuracy of the slip angle can be improved further.

In this manner, according to the embodiment 2, strain gauges 31a∼33a and 31b∼33b are placed at a single location with respect to a rotational direction of the tire on the inner liner of the tire 20Z almost linearly in the direction of the tire axis and among them strain gauges 31a, 31b and 32a, 32b and 33a, 33b are placed equally spaced apart and symmetrically with respect to the center of the tire axis and deformation amount of the tire tread 21 are measured by respective strain sensors. Then, the total bending speed V is computed from those peak values of deformation speed V1a, V2a and V1b, V2b, respectively obtained by differentiating with respect to time the deformation waveforms obtained from the 1st paired sensors comprising strain gauges 31a and 31b and from the 2nd paired sensors comprising strain gauges 32a and 32b. On the other hand, upon computing the camber angle correction value C from the load W, vehicle speed V and the deformation peak values V3a and V3b measured through the 3rd paired sensors comprising the strain gauges 33a and 33b, the slip angle indication S, namely S=V-C is computed. Thus, estimation of the slip angle under running condition of a vehicle is made based on thus obtained slip angle indication S and the map 39M stored in the storage means 39M storing the relation between the slip angle indication and the tire slip angle obtained beforehand, thereby enabling estimation of the slip angle added to the tire further accurately.

In this regard, by correcting the slip angle indication based in the load W and the vehicle speed V so as not to be affected by both of the load and the vehicle speed, the estimation accuracy of the slip angle can be further improved.

Also, in the preferred Embodiment 2 too, since the slip angle is estimated from the condition of deformation exhibited on the tread ring comprising the tire tread 21 and the belt 25, not only the estimation is free from effects caused by condition of the road surface, but also the slip angle changeable due to the road surface condition can be estimated accurately.

Though the Embodiment 2 too employs the arrangement of the paired sensors 31∼33 mounted on the inner liner portion 22, those paired sensors can be arranged in the tire block.

In this arrangement, since those paired sensors positioned near the tire contact patch, the estimation accuracy of the deformation condition of the tread ring can be improved but in view of durability it is preferable to mount the paired sensors 11 on the inner liner portion 22.

In the above example, the total bending speed V for estimation of the slip angle was obtained by means of two paired sensors 31 and 32 and the camber angle correction value C was obtained by means of the other single paired sensors 33, and yet three or more than paired sensors can be used. To the contrary, even two paired sensors can suffices detection of the total bending speed V and the camber angle correction value C. In this case, from the paired sensors located outside of the other paired sensors, the deformation peak values and the deformation speed peak values are detected. Then, the camber angle correction value C is detected based on the above deformation peak values and the total bending speed V is detected based on the above deformation speed peak values and the same from the paired sensors located inside of the above paired sensors. And further the difference deformation speed peak values from any one of paired sensors 31 or 32, namely (V1b-V1a) or (V2b-V2a) can be assigned as the bend speed V and in turn the slip angle can be estimated. However, as shown by the present Embodiment, use of at least two paired sensors is preferable to attain high estimation accuracy.

Also, the camber angle correction value can be obtained by averaging the values from more than two paired sensors and in this case too, the paired sensors for computing the camber angle correction value C is to be preferably located at positions further away exceeding a predetermined distance from the center of the tire axis.

In the above example, strain gauges were used for the sensors constituting paired sensors 31∼33 and yet type of those sensors are not limited to the strain gauge but other type of sensors, such as vibration sensor for detecting a vibration, piezoelectric film or piezoelectric cable for generating piezoelectric potential by bending or stretching it. As long as those sensors such as the above vibration sensor, piezoelectric film or piezoelectric cable produce output having a value corresponding to the deformation speed when they are mounted to the inner liner portion 22, the peak value and the occurrence time directly corresponding to the deformation speed are obtained and as long as the value corresponding to deformation is outputted, the output is differentiated with respective to time so as to obtain the deformation speed waveform similar to the Embodiment 2 and by obtaining the peak and its occurrence time at the time of entering into the leading edge, the indication of the deformation speed and that of the contact length can be obtained.

In the above example, respective sensors 31a∼33b were arranged at a single location along a rotational direction of the tire. However, those sensors 31a∼33b can be arranged at least two locations spaced apart with predetermined intervals along the rotational direction of the tire and by virtue of this arrangement of sensors accuracy of the slip angle estimation can be improved further.

Also in this arrangement too, it is preferable to position those sensors in an axial direction of the wheel equally spaced apart and symmetrically with respect to the center of the tire tread on the axial direction of the tire.

### EXAMPLE 2

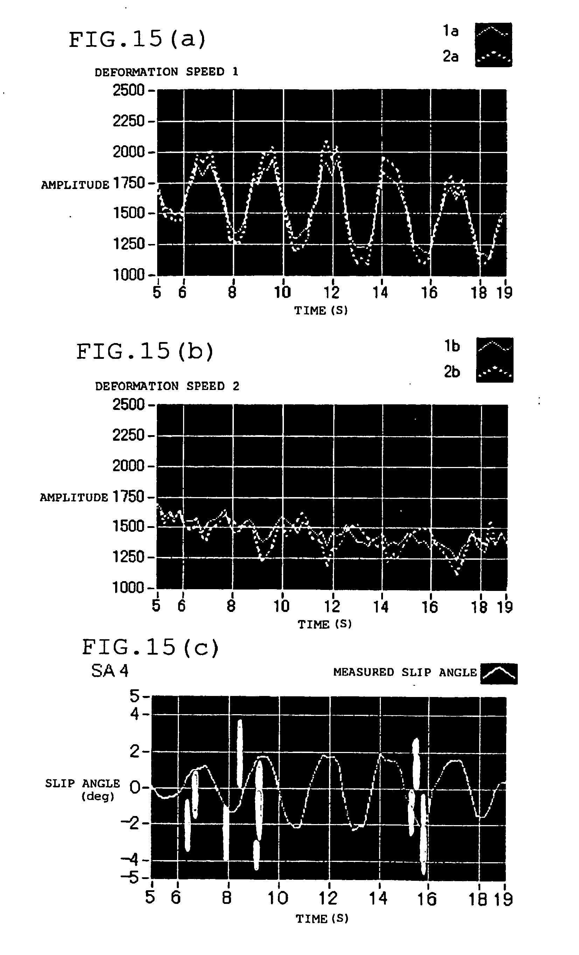

The tire as shown by Fig.12 having size 225/5571R was put on to the test vehicle and the slalom test was performed at a speed of 40km/h with the internal pressure of the tire set to 230Pa. In this test an optical type slip angle measuring device was mounted on the test tire and the actual slip angle was measured. Fig. 15 (a) and (b) show graphs formed by plotting the difference between deformation speed peak values at the time of entering into the leading edge measured at the inner liner portion under the condition of a slalom running and Fig.15(c) shows a graph formed by plotting the actual slip angle measured by the optical slip angle measurement device under that slalom running. From those graphs, it is understood that depending on the magnitude and direction of the slip angle the relative size of peak values of the deformation speed V1a and V2a and also those of V1b and V2b, respectively change.

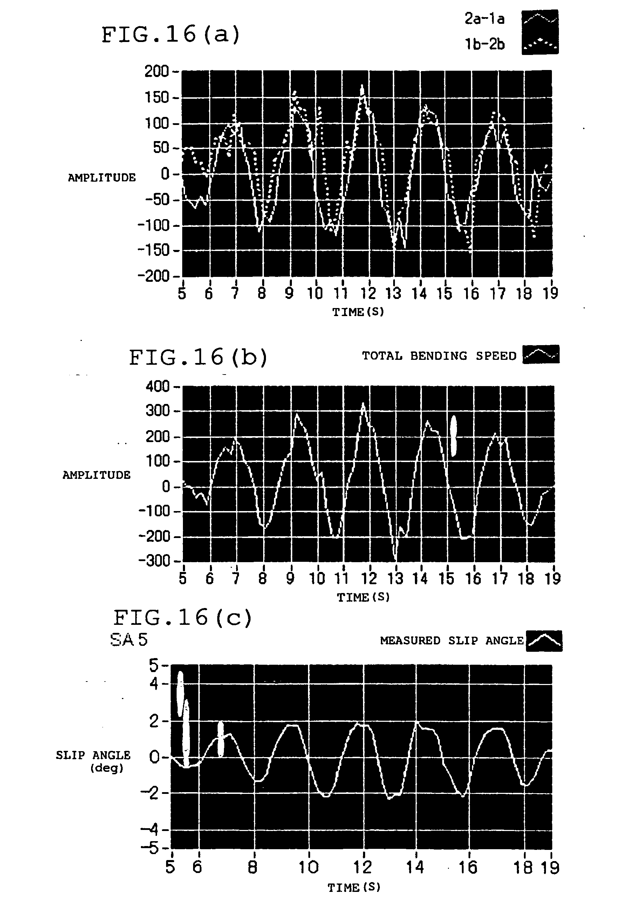

Fig. 16 (a) and (b) show the graphs obtained by plotting the upper side bending speed (V1b-V2b) and the lower side bending speed (V2a-V1a), respectively at the time of entering into the leading edge measured at the inner liner portion under the slalom running and it is understood that depending on the direction or magnitude of the slip angle the above bending speed of respective portions changes and behaviors of their changes are almost the same.

Fig. 16 (b) shows the graph obtained by plotting the total bending speed, namely (V1b-V2b) + (V2a-V1b) measured at the inner liner portion under the slalom running, and this plotted total bending speed exhibits changes closely to those which exhibited by the actual slip angle measured by the optical measurement device.

Then, from this similarity it is understood that the slip angle can be estimated from the total bending speed.

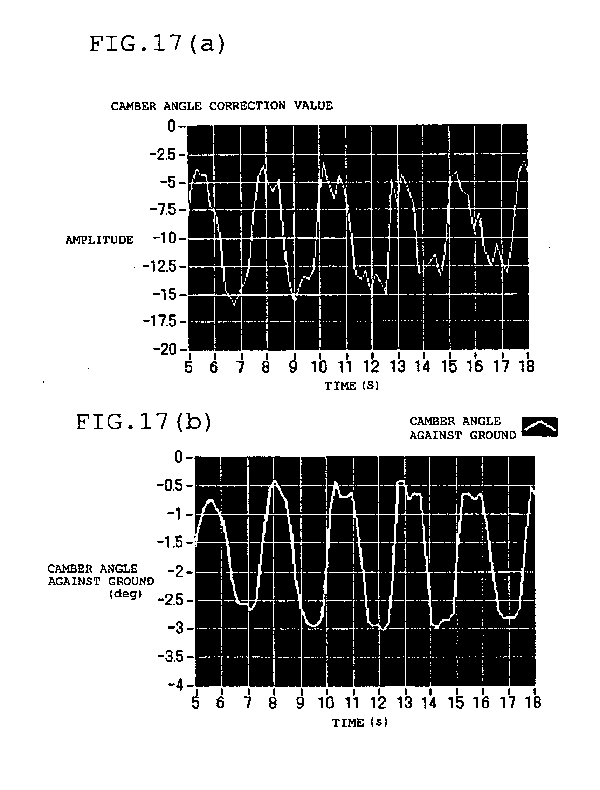

The graph by Fig.17 (a) shows change of the camber angle with respect to time measured at the inner liner portion under slalom running, and Fig.17 (b) shows the graph presenting the change of the actual measured value of the slip angle with respect to time.

From those graphs, it is understood that the camber angle correction value has a good correspondence with the actual camber angle regardless of the slip angle.

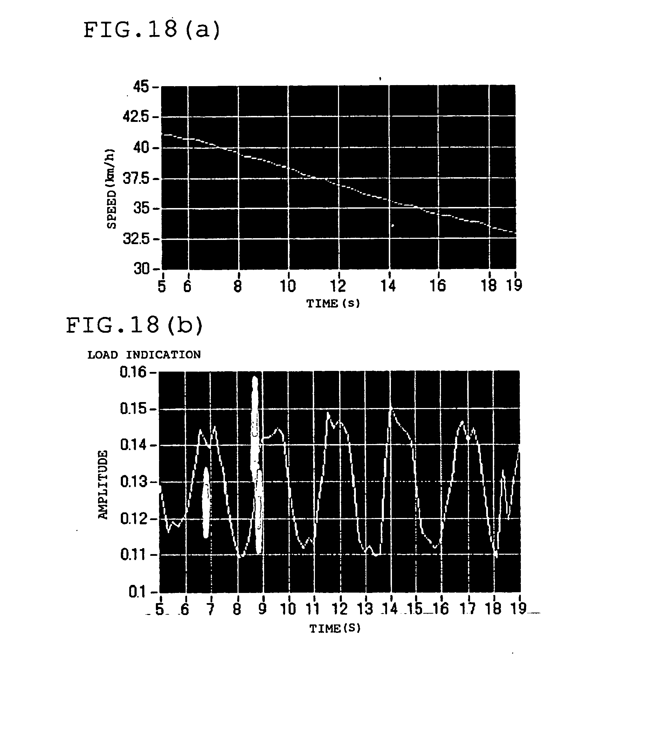

The graph of Fig. 18 (a) shows change of vehicle speed with respect to time under the slalom running and the graph below the above is formed by plotting the change of the estimation value of the load with respect to time.

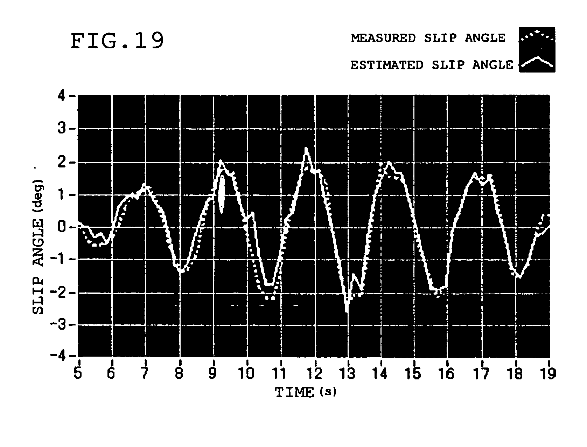

The graph potted with the broken line as shown by Fig.19 shows the estimation value of the slip angle obtained through correcting the slip angle indication, which is obtained by subtracting the camber angle correction value as shown by Fig.17 (a) from the total bending speed V as shown by Fig.16 (b), with respect to the speed and the load as shown by Fig.18 (a) and (b).

By virtue of the foregoing operation, it has been acknowledged that the slip angle estimation value obtained by the estimation method as disclosed by the present invention has a highly qualified correlation with the actual slip angle as shown by the solid line measured by the optical measurement device in the above graph.

### Industrial Feasibility

As hitherto mentioned, according to the present invention the slip angle under a running condition of a vehicle can be estimated accurately regardless of condition of a road surface, running safety of a vehicle can be improved extraordinarily by feeding back the above estimated slip angle to a vehicle control.

## Claims

1. A method for detecting a tire slip angle comprising steps of:
arranging a single paired sensors (11) or plural paired sensors (31, 32) at positions equally spaced apart in the axial direction of the tire placed symmetrically with respect to the center of the tire inner portion (22) in the axial direction of a tire (20);
**characterised by**
detecting an indication of deformation speed of the tire at a starting point of a contact patch based on the detected signal of the sensors;
comparing the indications of deformation speed;
thereby estimating the tire slip angle added to the tire.

2. The method for detecting the tire slip angle according to claim 1, comprising steps of:
arranging plural paired sensors, in addition to detecting the indications of the deformation speed, detecting indications of deformation amount of the tire tread (21) at positions equally spaced apart in the axial direction of the tire placed symmetrically with respect to the center of the tire tread in the axial direction of the tire;
correcting the estimation value of the slip angle estimated from the indications of the deformation speed based on the indications of the deformation amount and;
thereby estimating the tire slip angle with a camber angle provided is estimated.

3. The method for detecting the tire slip angle according to claim 2 comprising:
detecting the indications of the deformation amount based on the output signals from at least single paired sensors located on an outer side with respect to the center in the axial direction of the tire.

4. The method for detecting the tire slip angle according to claim 1 or claim 3, wherein a strain gauge (11A, 11B, 31A, 31B, 32A, 32B) is used as the sensor.

5. The method for detecting the tire slip angle according to claim 4, comprising steps of:
orienting the direction of the deformation detection of the strain gauge to a circumferential direction of the tire, obtaining a deformation speed waveform by differentiating the detected waveform with respect to time;
detecting a peak value of the deformation speed wave occurring at the time when the tire tread enters into the portion contacting with the road surface associated with the rotation of the tread and;
thereby assigning the peak value as an indication of the deformation speed.

6. The method for detecting the tire slip angle according to claim 5, wherein a ratio of the indication of the deformation speed, which is respectively detected by the paired strain gauges arranged at positions equally spaced apart in the axial direction of the tire placed symmetrically with respect to the center of the tire tread in the axial direction of the tire, is used to estimate the slip angle applied to the tire.

7. The method for detecting the tire slip angle according to claim 5, wherein a plurality of the paired sensors, which are the gauge sensors respectively, are arranged, the slip angle applied to the tire is estimated by using a total bending speed which is total sum of
a) an indication of the deformation speed on one side of the tire axis, which is obtained by a difference between:
1) an indication of the deformation speed of a sensor arranged on the one side of the tire and is one of the sensors constituting the inside paired sensor near the center of the tire axial direction and;
2) an indication of the deformation speed of a sensor arranged on the one side of the tire axis and is out of the sensors constituting the outside paired sensor and;
b) an indication of the deformation speed on the other side of the tire axis, which is obtained by a difference between:
1) an indication of indication of the deformation speed of a sensor arranged on the other side of the tire and is out of the sensors constituting the inside paired sensors and;
2) an indication of the deformation speed of a sensor arranged on the other side of the tire axis and is out of the sensors constituting the outside paired sensor.

8. The method for detecting the tire slip angle according to claim 7, comprising steps of:
orienting the direction of deformation detection of the strain gauge to a circumferential direction of the tire;
detecting a peak value of the detected wave form occurring at the point where the contact pressure is maximized when the tire tread enters into the portion contacting with the road surface associated with the rotation of the tire and;
thereby assigning the peak value as an indication of the deformation amount.

9. The method for detecting the tire slip angle according to claim 8 comprising steps of:
dividing an indication of the difference of the deformation amount of the paired sensor located at the positions farthest from the center of the tire axial direction by sum of indication of the deformation amount of the paired sensor;
dividing the value obtained by dividing the difference by the sum by tire load and multiplying the value by the wheel speed to designate the value as a camber correction value;
subtracting the camber correction value from the total bending speed V to designate the value as an indication of the slip angle and;
estimating the slip angle from the indication of the slip angle.

10. The method for detecting the tire slip angle according to claim 9, wherein the indication of the slip angle is divided by at least one of tire load or wheel speed to estimate the slip angle applied to the tire.

11. The method for detecting the tire slip angle according to claim 1 or claim 2, wherein a vibration sensor, a piezoelectric film or a piezoelectric cable is used as the sensor.

12. The method for detecting the tire slip angle according to claim 1, comprising steps of:
orienting the direction of detection of each sensor to a circumferential direction of the tire;
detecting a time difference of occurrence of the peak appearing on the detected wave form between the occurrence associated with entering into the contact portion with the road surface and the occurrence associated with leaving the contact portion with the road surface;
detecting an indication of the length of the contact patch detected at each of positions equally spaced apart in the axial direction the tire placed symmetrically with respect to the center of the tire tread in the axial direction of the tire;
computing an average value of the detected indications of the length of the contact patch;
estimating a load exerted on the tire from the average value of the indication of the length of contact patch; and
correcting the estimation value of the tire slip angle based on the estimated load value.

13. The method for detecting the tire slip angle according to claim 12, comprising:
detecting an internal pressure of the tire at a wheel portion or at a tire portion and;
thereby correcting the estimation value of the load based on the internal pressure.

14. The method for detecting the tire slip angle according to any one of claims 1-13, comprising:
mounting a wheel speed sensor on a vehicle and,
thereby correcting the estimated value of the tire slip angle based on information from the wheel speed sensor.

## Patentansprüche

1. Verfahren zum Ermitteln eines Reifenschräglaufwinkels, die Schritte umfassend:
Anordnen eines einzelnen Sensorpaars (11) oder mehrerer Sensorpaare (31, 32) an Positionen, die in der axialen Richtung des Reifens gleich beabstandet und in Bezug auf die Mitte des Reifeninnenabschnitts (22) in der axialen Richtung eines Reifens (20) symmetrisch platziert sind;
**gekennzeichnet durch**:
Ermitteln eines Messwerts der Verformungsgeschwindigkeit des Reifens an einem Anfangspunkt einer Aufstandsfläche auf der Grundlage des ermittelten Signals der Sensoren;
Vergleichen der Messwerte der Verformungsgeschwindigkeit;
**dadurch** erfolgendes Schätzen des Reifenschräglaufwinkels, der auf den Reifen angewendet wird.

2. Verfahren zum Ermitteln des Reifenschräglaufwinkels nach Anspruch 1, die Schritte umfassend:
Anordnen mehrerer Sensorpaare, die zusätzlich zum Ermitteln der Messwerte der Verformungsgeschwindigkeit Messwerte des Verformungsbetrags der Reifenlauffläche (21) ermitteln, und zwar an Positionen, die in der axialen Richtung des Reifens gleich beabstandet und in Bezug auf die Mitte der Reifenlauffläche in der axialen Richtung des Reifens symmetrisch platziert sind;
Korrigieren des Schätzwerts des Schräglaufwinkels, der aus den Messwerten der Verformungsgeschwindigkeit geschätzt wurde, auf der Grundlage der Messwerte des Verformungsbetrags; und
**dadurch** erfolgendes Schätzen des Reifenschräglaufwinkels mit einem Sturzwinkel.

3. Verfahren zum Ermitteln des Reifenschräglaufwinkels nach Anspruch 2, umfassend:
Ermitteln der Messwerte des Verformungsbetrags auf der Grundlage der Ausgangssignale von mindestens einem einzelnen Sensorpaar, das an einer äußeren Seite in Bezug auf die Mitte in der axialen Richtung des Reifens angeordnet ist.

4. Verfahren zum Ermitteln des Reifenschräglaufwinkels nach Anspruch 1 oder 3, wobei ein Dehnungsmessstreifen (11A, 11B, 31A, 31B, 32A, 32B) als Sensor verwendet wird.

5. Verfahren zum Ermitteln des Reifenschräglaufwinkels nach Anspruch 4, die Schritte umfassend:
Orientieren der Richtung der Verformungsermittlung des Dehnungsmessstreifens in eine Umfangsrichtung des Reifens, Erlangen einer Verformungsgeschwindigkeitswellenform durch Differenzieren der ermittelten Wellenform nach der Zeit;
Ermitteln eines Spitzenwerts der Verformungsgeschwindigkeitswelle, der zu dem Zeitpunkt auftritt, wenn die Reifenlauffläche im Zusammenhang mit der Rotation der Reifenlauffläche in den Bereich eintritt, der die Straßenoberfläche berührt; und
**dadurch** erfolgendes Zuweisen des Spitzenwerts als Messwert der Verformungsgeschwindigkeit.

6. Verfahren zum Ermitteln des Reifenschräglaufwinkels nach Anspruch 5, wobei ein Verhältnis der Messwerte der Verformungsgeschwindigkeit, die jeweils durch die Dehnungsmessstreifenpaare ermittelt werden, die an in der axialen Richtung des Reifens gleich beabstandeten und in Bezug auf die Mitte der Reifenlauffläche in der axialen Richtung eines Reifens symmetrisch angeordneten Positionen platziert sind, verwendet wird, um den auf den Reifen angewendeten Schräglaufwinkel zu schätzen.

7. Verfahren zum Ermitteln des Reifenschräglaufwinkels nach Anspruch 5, in dem eine Vielzahl der Sensorpaare, welche jeweils die Spursensoren sind, angeordnet ist, wobei der auf den Reifen angewendete Schräglaufwinkel unter Verwendung einer Gesamtverbiegungsgeschwindigkeit geschätzt wird, welche die Gesamtsumme aus folgendem ist:
a) ein Messwert der Verformungsgeschwindigkeit auf einer Seite der Reifenachse, der erlangt wird durch eine Differenz zwischen:
1) einem Messwert der Verformungsgeschwindigkeit eines Sensors, der auf der einen Seite des Reifens angeordnet und einer der Sensoren ist, welche das innere Sensorpaar in der Nähe der Mitte der Reifenaxialrichtung bilden; und
2) einem Messwert der Verformungsgeschwindigkeit eines Sensors, der auf der einen Seite des Reifens angeordnet und einer der Sensoren ist, welche das äußere Sensorpaar bilden; und
b) ein Messwert der Verformungsgeschwindigkeit auf der anderen Seite der Reifenachse, der erlangt wird durch eine Differenz zwischen:
1) einem Messwert der Verformungsgeschwindigkeit eines Sensors, der auf der anderen Seite des Reifens angeordnet und einer der Sensoren ist, welche das innere Sensorpaar bilden; und
2) einem Messwert der Verformungsgeschwindigkeit eines Sensors, der auf der anderen Seite des Reifens angeordnet und einer der Sensoren ist, welche das äußere Sensorpaar bilden.

8. Verfahren zum Ermitteln des Reifenschräglaufwinkels nach Anspruch 7, die Schritte umfassend:
Orientieren der Richtung der Verformungsermittlung des Dehnungsmessstreifens in eine Umfangsrichtung des Reifens;
Ermitteln eines Spitzenwerts der ermittelten Wellenform, der an dem Punkt auftritt, wo der Berührungsdruck maximiert wird, wenn die Reifenlauffläche im Zusammenhang mit der Rotation des Reifens in den Bereich eintritt, der die Straßenoberfläche berührt; und
**dadurch** erfolgendes Zuweisen des Spitzenwerts als Messwert des Verformungsbetrags.

9. Verfahren zum Ermitteln des Reifenschräglaufwinkels nach Anspruch 8, die Schritte umfassend:
Dividieren eines Messwerts der Differenz des Verformungsbetrags des Sensorpaars, das an den Positionen angeordnet ist, die am weitesten von der Mitte der Reifenaxialrichtung entfernt sind, durch die Summe der Messwerte des Verformungsbetrags des Sensorpaars;
Dividieren des Werts, der durch Dividieren der Differenz durch die Summe erlangt wird, durch die Reifenbelastung, und Multiplizieren des Werts mit der Radgeschwindigkeit, um den Wert als einen Sturzkorrekturwert festzulegen;
Subtrahieren des Sturzkorrekturwerts von der Gesamtverbiegungsgeschwindigkeit V, um den Wert als einen Messwert des Schräglaufwinkels festzulegen; und
Schätzen des Schräglaufwinkels aus dem Messwert des Schräglaufwinkels.

10. Verfahren zum Ermitteln des Reifenschräglaufwinkels nach Anspruch 9, wobei der Messwert des Schräglaufwinkels durch mindestens eines von folgendem dividiert wird, nämlich die Reifenbelastung oder die Radgeschwindigkeit, um den auf den Reifen angewendeten Reifenschräglaufwinkel zu schätzen.

11. Verfahren zum Ermitteln des Reifenschräglaufwinkels nach Anspruch 1 oder 2, wobei ein Vibrationssensor, eine piezoelektrische Dünnschicht oder ein piezoelektrisches Kabel als Sensor verwendet wird.

12. Verfahren zum Ermitteln des Reifenschräglaufwinkels nach Anspruch 1, die Schritte umfassend:
Orientieren der Ermittlungsrichtung jedes Sensors in eine Umfangsrichtung des Reifens;
Ermitteln einer Zeitdifferenz des Auftretens des Spitzenausschlags, der auf der ermittelten Wellenform erscheint, zwischen dem Auftreten, das dem Eintreten in den Berührungsabschnitt mit der Straßenoberfläche zugeordnet ist, und dem Auftreten, das dem Verlassen des Berührungsabschnitts mit der Straßenoberfläche zugeordnet ist;
Ermitteln eines Messwerts der Länge der Aufstandsfläche, der an jeder von Positionen ermittelt wird, die in der axialen Richtung des Reifens gleich beabstandet und in Bezug auf die Mitte der Reifenlauffläche in der axialen Richtung des Reifens symmetrisch platziert sind;
Berechnen eines Mittelwerts der ermittelten Messwerte der Länge der Aufstandsfläche;
Schätzen einer auf den Reifen ausgeübten Belastung aus dem Mittelwert der Messwerte der Länge der Aufstandsfläche; und
Korrigieren des Schätzwerts des Reifenschräglaufwinkels auf der Grundlage des geschätzten Belastungswerts.

13. Verfahren zum Ermitteln des Reifenschräglaufwinkels nach Anspruch 12, umfassend:
Ermitteln eines Innendrucks des Reifens an einem Radabschnitt oder an einem Reifenabschnitt; und
**dadurch** erfolgendes Korrigieren des Schätzwerts der Belastung auf der Grundlage des Innendrucks.

14. Verfahren zum Ermitteln des Reifenschräglaufwinkels nach einem der Ansprüche 1 bis 13, umfassend:
Anbringen eines Radgeschwindigkeitssensors an einem Fahrzeug; und
**dadurch** erfolgendes Korrigieren des Schätzwerts des Reifenschräglaufwinkels auf der Grundlage von Information vom Radgeschwindigkeitssensor.

## Revendications

1. Méthode de détection de l'angle de glissement d'un pneu comprenant les étapes consistant à :
disposer une seule paire de détecteurs (11) ou plusieurs paires de détecteurs (31, 32) à des positions également espacées dans la direction axiale du pneu de façon symétrique par rapport au centre de la partie interne du pneu (22) dans la direction axiale d'un pneu (20) ;
**caractérisée en ce qu'**elles consistent à :
détecter une indication de vitesse de déformation du pneu à un point de départ d'une aire de contact sur la base du signal détecté des détecteurs ;
comparer les indications de vitesse de déformation ;
estimer ainsi l'angle de glissement de pneu ajouté au pneu.

2. Méthode de détection de l'angle de glissement d'un pneu selon la revendication 1, comprenant les étapes consistant à :
disposer plusieurs paires de détecteurs qui, en plus de détecter les indications de la vitesse de déformation, détectent des indications de quantité de déformation de la bande de roulement de pneu (21), à des positions également espacées dans la direction axiale du pneu de façon symétrique par rapport au centre de la bande de roulement de pneu dans la direction axiale du pneu ;
corriger la valeur d'estimation de l'angle de glissement estimée à partir des indications de la vitesse de déformation sur la base des indications de la quantité de déformation et ;
estimer ainsi l'angle de glissement du pneu à partir d'un angle de carrossage fourni.

3. Méthode de détection de l'angle de glissement d'un pneu selon la revendication 2, consistant en :
détecter les indications de la quantité de déformation sur la base des signaux de sortie provenant d'au moins une seule paire de détecteurs se trouvant sur un côté externe par rapport au centre dans la direction axiale du pneu.

4. Méthode de détection de l'angle de glissement d'un pneu selon la revendication 1 ou la revendication 3, dans laquelle un extensomètre (11A, 11B, 31A, 31B, 32A, 32B) est utilisé comme détecteur.

5. Méthode de détection de l'angle de glissement d'un pneu selon la revendication 4, comprenant les étapes consistant à :
orienter la direction de la détection de déformation de l'extensomètre vers une direction circonférentielle du pneu, obtenir une forme d'onde de vitesse de déformation en différentiant la forme d'onde détectée par rapport au temps ;
détecter une valeur crête de l'onde de vitesse de déformation survenant au moment où la bande de roulement du pneu entre dans la partie en contact avec la surface de la route associée à la rotation de la bande ; et
attribuer ainsi la valeur crête comme une indication de la vitesse de déformation.

6. Méthode de détection de l'angle de glissement d'un pneu selon la revendication 5, dans laquelle un rapport de l'indication de la vitesse de déformation, qui est respectivement détectée par les paires d'extensomètres disposées à des positions également espacées dans la direction axiale du pneu de façon symétrique par rapport au centre de la bande de roulement du pneu dans la direction axiale du pneu, est utilisé pour estimer l'angle de glissement appliqué au pneu.

7. Méthode de détection d'angle de glissement d'un pneu selon la revendication 5, dans laquelle sont disposées plusieurs paires de détecteurs, qui sont respectivement les détecteurs de jaugeage, l'angle de glissement appliqué au pneu étant estimé en utilisant une vitesse de cintrage totale qui est la somme totale
a) d'une indication de la vitesse de déformation d'un côté de l'axe du pneu, qui est obtenue par une différence entre :
1) une indication de la vitesse de déformation d'un détecteur disposé sur ledit côté du pneu et qui est l'un des détecteurs constituant la paire de détecteurs interne à proximité du centre de la direction axiale du pneu et ;
2) une indication de la vitesse de déformation d'un détecteur disposé sur ledit côté de l'axe du pneu et qui est un des détecteurs constituant la paire de détecteurs extérieure, et ;
b) d'une indication de la vitesse de déformation de l'autre côté de l'axe du pneu, qui est obtenue par une différence entre :
1) une indication de l'indication de la vitesse de déformation d'un détecteur disposé de l'autre côté du pneu et qui est un des détecteurs constituant la paire de détecteurs interne, et ;
2) une indication de la vitesse de déformation d'un détecteur disposé de l'autre côté de l'axe du pneu et qui est un des détecteurs constituant la paire de détecteurs externe.

8. Méthode de détection de l'angle de glissement d'un pneu selon la revendication 7, comprenant les étapes consistant à :
orienter la direction de la détection de déformation de l'extensomètre vers une direction circonférentielle du pneu ;
détecter une valeur crête de la forme d'onde détectée survenant au point où la pression de contact est maximisée lorsque la bande de roulement du pneu entre dans la partie en contact avec la surface de la route associée à la rotation du pneu ; et
attribuer ainsi la valeur crête comme une indication de la quantité de déformation.

9. Méthode de détection de l'angle de glissement d'un pneu selon la revendication 8, comprenant les étapes consistant à :
diviser une indication de la différence de la quantité de déformation de la paire de détecteurs se trouvant aux positions les plus éloignées du centre de la direction axiale du pneu par la somme d'indication de la quantité de déformation de la paire de détecteurs ;
diviser la valeur obtenue en divisant la différence par la somme de la charge du pneu et en multipliant la valeur par la vitesse de la roue pour désigner la valeur comme une valeur de correction de carrossage ;
soustraire la valeur de correction de carrossage de la vitesse de cintrage totale V pour désigner la valeur comme une indication de l'angle de glissement ; et
estimer l'angle de glissement à partir de l'indication de l'angle de glissement.

10. Méthode de détection de l'angle de glissement d'un pneu selon la revendication 9, dans laquelle l'indication de l'angle de glissement est divisée par au moins une de la charge du pneu ou de la vitesse de roue pour estimer l'angle de glissement appliqué au pneu.

11. Méthode de détection de l'angle de glissement d'un pneu selon la revendication 1 ou la revendication 2, dans laquelle un détecteur de vibrations, un film piézoélectrique ou un câble piézoélectrique est utilisé comme détecteur.

12. Méthode de détection de l'angle de glissement d'un pneu selon la revendication 1, comprenant les étapes consistant à :
orienter la direction de détection de chaque détecteur vers une direction circonférentielle du pneu ;
détecter une différence de temps d'occurrence de la crête apparaissant sur la forme d'onde détectée entre l'occurrence associée à l'entrée dans la partie de contact avec la surface de la route et l'occurrence associée à la sortie de la partie de contact avec la surface de la route ;
détecter une indication de la longueur de l'aire de contact détectée à chacune des positions également espacées dans la direction axiale du pneu de façon symétrique par rapport au centre de la bande de roulement du pneu dans la direction axiale du pneu ;
calculer une valeur moyenne des indications détectées de la longueur de l'aire de contact ;
estimer une charge exercée sur le pneu à partir de la valeur moyenne de l'indication de la longueur de l'aire de contact ; et
corriger la valeur d'estimation de l'angle de glissement du pneu sur la base de la valeur de charge estimée.

13. Méthode de détection de l'angle de glissement d'un pneu selon la revendication 12, consistant à :
détecter une pression interne du pneu au niveau d'une partie de roue ou au niveau d'une partie de pneu et ;
corriger ainsi la valeur d'estimation de la charge sur la base de la pression interne.

14. Méthode de détection de l'angle de glissement d'un pneu selon l'une quelconque des revendications 1 à 13, consistant à :
monter un détecteur de vitesse de roue sur un véhicule, et
corriger ainsi la valeur estimée de l'angle de glissement du pneu sur la base des informations provenant du détecteur de vitesse de roue.
